# EUROPÄISCHE PATENTSCHRIFT

(11) **EP 3 416 888 B1**
(45) Veröffentlichungstag und Bekanntmachung des Hinweises auf die Patenterteilung: **01.04.2020**
(21) Anmeldenummer: 17707200.6
(22) Anmeldetag: 16.02.2017
(51) Int. Cl.: B64D 11/06, B60N 2/68

(54) **FLUGZEUGSITZVORRICHTUNG**
AIRCRAFT SEAT DEVICE
DISPOSITIF FORMANT SIÈGE D'AVION

(30) Priorität: 16.02.2016 DE 102016102707
(43) Veröffentlichungstag der Anmeldung: 26.12.2018
(73) Patentinhaber: Recaro Aircraft Seating GmbH & Co. KG, 74523 Schwäbisch Hall (DE)
(72) Erfinder: JAEGER, Gunther, 74429 Sulzbach-Laufen (DE); MEJUHAS, Marsel, 74523 Schwäbisch Hall (DE); RODERWALD, Martin, Fort Worth, TX 76244 (US); HENNRICH, Christoph, 74523 Schwäbisch Hall (DE); DRENZECK, Thomas, 74545 Michelfeld (DE)
(74) Vertreter: Daub, Thomas
(86) Internationale Anmeldenummer: PCT/EP2017/053516
(87) Internationale Veröffentlichungsnummer: WO 2017/140791

(56) Entgegenhaltungen:
- EP-A1- 1 086 759
- WO-A1-2005/110157
- WO-A1-2010/117920
- WO-A1-2015/055551
- DE-A1-102012 020 032
- JP-A- H0 889 358
- US-A1- 2008 290 242
- US-A1- 2011 260 003

## Beschreibung

### Stand der Technik

Die Erfindung betrifft eine Flugzeugsitzvorrichtung nach dem Oberbegriff des Patentanspruchs 1.

Es ist bereits eine Flugzeugsitzvorrichtung mit zumindest einem Tragrohr, das dazu vorgesehen ist, zumindest einen Teil einer Aufständereinheit eines Flugzeugsitzes auszubilden, vorgeschlagen worden.

Aus der WO 2010/117920 A1 ist bereits eine Flugzeugsitzvorrichtung mit zumindest einem Tragrohr bekannt, das dazu vorgesehen ist, zumindest einen Teil eines Flugzeugsitzes auszubilden, wobei das zumindest eine Tragrohr als ein einfaches Hohlprofil ausgebildet ist und in zumindest einem Teilbereich, in Umfangsrichtung des Tragrohrs betrachtet, eine sich verändernde Wandstärke und eine zumindest im Wesentlichen kreisförmige Außenkontur aufweist.

Aus der US 2008/290242 A1 ist eine Flugzeugsitzvorrichtung mit zumindest einem Tragrohr bekannt, das dazu vorgesehen ist, zumindest einen Teil eines Flugzeugsitzes auszubilden, wobei das Tragrohr, in Umfangsrichtung des Tragrohrs betrachtet, eine sich verändernde Wandstärke aufweist.

Aus der DE 10 2012 020032 A1 ist eine Flugzeugsitzvorrichtung mit zumindest einem Tragrohr bekannt, das dazu vorgesehen ist, zumindest einen Teil eines Flugzeugsitzes auszubilden, wobei das Tragrohr, in Umfangsrichtung des Tragrohrs betrachtet, eine sich verändernde Wandstärke aufweist.

Aus der US 2011/260003 A1 ist eine Flugzeugsitzvorrichtung mit zumindest einem Tragrohr bekannt, das dazu vorgesehen ist, zumindest einen Teil eines Flugzeugsitzes auszubilden. Dokument EP 1086759 A1 offenbart eine sich abschnittsweise verändernde Wandstärke eines Rohrs.

Die Aufgabe der Erfindung besteht insbesondere darin, eine gattungsgemäße Vorrichtung mit verbesserten Eigenschaften hinsichtlich einer besonders leichten und/oder stabilen Flugzeugsitzvorrichtung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit zumindest einem Tragrohr, das dazu vorgesehen ist, zumindest einen Teil einer Aufständereinheit eines Flugzeugsitzes auszubilden, wobei das zumindest eine Tragrohr als ein einfaches Hohlprofil ausgebildet ist und in zumindest einem Teilbereich, in Umfangsrichtung des Tragrohrs betrachtet, eine sich verändernde Wandstärke und eine zumindest im Wesentlichen kreisförmige Außenkontur aufweist.

Es wird vorgeschlagen, dass sich die Außenkontur des Tragrohrs in ihrer Grundform zumindest in Teilbereichen von einer Grundform einer Innenkontur unterscheidet. Unter einer "Flugzeugsitzvorrichtung" soll dabei insbesondere eine Vorrichtung, die zumindest einen Teil, einen kompletten Flugzeugsitz, einen Teil einer Flugzeugsitzreihe oder eine gesamte Flugzeugsitzreihe ausbildet, verstanden werden. Unter einem "Flugzeugsitz" soll dabei insbesondere ein Sitz verstanden werden, der dazu vorgesehen ist, in einer Flugzeugkabine aufgeständert zu werden. Der Flugzeugsitz weist dabei vorzugsweise zumindest eine Aufständereinheit, über die er auf dem Kabinenboden aufgeständert ist, einen mit der Aufständereinheit gekoppelten Sitzboden, der dazu vorgesehen ist, eine Sitzfläche für einen Passagier auszubilden, eine mit dem Sitzboden und der Aufständereinheit gekoppelte Rückenlehne, die dazu vorgesehen ist, eine Rückenlehnenfläche für einen Passagier bereitzustellen, und zumindest eine Armlehne auf. Unter einer "Aufständereinheit" soll dabei insbesondere eine Einheit eines Flugzeugsitzes verstanden werden, mittels deren der Flugzeugsitz, insbesondere über zumindest zwei Befestigungsschienen, auf einem Kabinenboden der Flugzeugkabine aufgeständert ist und dazu vorzugsweise mehrere Sitzfüße und zumindest ein mit den Sitzfüßen gekoppeltes Tragrohr aufweist. Unter einem "Tragrohr" soll dabei insbesondere ein Teil der Aufständereinheit verstanden werden, der sich quer zu der Sitzrichtung der Sitze erstreckt, welche über die Aufständereinheit aufgeständert sind. Dabei ist das Tragrohr insbesondere dazu vorgesehen, Lasten in die Sitzfüße der Aufständereinheit abzuleiten und/oder Torsionsmomente aufzunehmen. Unter "zumindest einem Teilbereich" soll dabei insbesondere ein Bereich des Tragrohrs entlang einer Längserstreckung verstanden werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "sich verändernden Wandstärke" soll dabei insbesondere verstanden werden, dass sich eine Dicke der Wandung, gemessen von einer Innenseite bis an eine Außenseite, im Verlauf in Richtung der Umfangsrichtung zumindest einmal verändert. Durch eine erfindungsgemäße Ausgestaltung kann vorteilhaft ein Tragrohr bereitgestellt werden, das besonders vorteilhafte Festigkeitseigenschaften und ein vorteilhaft gerichtetes Widerstandsmoment aufweist. Dadurch kann eine Sitzvorrichtung besonders leicht ausgebildet werden, da das zumindest eine Tragrohr besonders vorteilhaft entsprechend einer Belastung ausgelegt werden kann.

Besonders vorteilhaft ist es, wenn das zumindest eine Tragrohr als ein einfaches Hohlprofil ausgebildet ist. Unter einem "einfachen Hohlprofil" soll dabei insbesondere ein Profil verstanden werden, das einen Innenraum zumindest in einer Ebene zumindest im Wesentlichen umschließt, wobei das Profil eine einzelne Wandung aufweist, die den Innenraum umschließt. Dabei ist es denkbar, dass die einzelne Wandung aus mehreren Einzelsegmenten ausgebildet ist, die in einem montierten/verbundenen Zustand eine gemeinsame, zusammenhängende Wandung ausbilden. Ein einfaches Hohlprofil weist insbesondere keine voneinander getrennten Innenbereiche innerhalb des Innenraums auf, die durch voneinander zumindest teilweise beabstandete Wandungen gebildet sind. Dadurch kann das Tragrohr besonders leicht und einfach ausgebildet werden.

Ferner wird vorgeschlagen, dass das Tragrohr zumindest ein einstückiges Element aufweist, das, in Umfangsrichtung des Tragrohrs betrachtet, eine sich verändernde Wandstärke aufweist. Unter einem "einstückigen Element" soll dabei insbesondere ein Element verstanden werden, das aus einem zusammenhängenden Stück Material gebildet ist. Grundsätzlich ist es auch denkbar, dass das einstückige Element mehrere Elemente aufweist, die in einem Verbindungsprozess, beispielsweise durch Kleben und/oder Schweißen, stoffschlüssig miteinander verbunden sind. Vorteilhaft ist das als einstückiges Element ausgebildete Tragrohr aber in einem Strangpressverfahren einstückig hergestellt. Dadurch kann das Tragrohr besonders vorteilhaft ausgebildet werden.

Besonders vorteilhaft ist es, wenn das Tragrohr eine zumindest im Wesentlichen kreisförmige Außenkontur aufweist. Unter einer "zumindest im Wesentlichen kreisförmigen Außenkontur" soll dabei insbesondere verstanden werden, dass die Außenkontur von einer Kreiskontur höchstens um 10 %, vorzugsweise höchstens um 5 % und in einer vorteilhaften Ausgestaltung um weniger als 1 % abweicht. Insbesondere weist das Tragrohr dabei eine konstante Außenkontur auf. Vorteilhaft ist die Außenkontur von einer Kreiskontur gebildet. Dadurch kann das Tragrohr besonders vorteilhaft ausgebildet werden.

Dadurch, dass sich die Außenkontur des Tragrohrs in ihrer Grundform zumindest in Teilbereichen von einer Grundform einer Innenkontur unterscheidet, kann die unterschiedliche Wandstärke des Tragrohrs besonders einfach ausgebildet werden.

Weiterhin wird vorgeschlagen, dass das Tragrohr entlang seiner Längserstreckung eine sich verändernde Wandstärke aufweist. Unter einer "Längserstreckung" soll dabei insbesondere eine Haupterstreckungsrichtung des Tragrohrs verstanden werden, die in einem montierten Zustand orthogonal zu einer Sitzrichtung, dessen Teil die Flugzeugsitzvorrichtung ist, ausgerichtet ist. Dadurch kann das Tragrohr besonders variabel ausgebildet werden.

In einer nicht mehr zur Erfindung gehörenden Ausgestaltung kann das Tragrohr von zumindest zwei Außenelementen und wenigstens einem Verbindungselement gebildet sein, welches die beiden Außenelemente miteinander verbindet, wobei zumindest die Außenelemente und das wenigstens eine Verbindungselement aus einem unterschiedlichen Material gebildet sind. Unter einem "Außenelement" soll dabei insbesondere ein Element verstanden werden, das das Tragrohr zumindest in einer Richtung nach außen hin begrenzt und dabei zumindest teilweise eine Außenfläche des Tragrohr ausbildet. Unter einem "Verbindungselement" soll dabei insbesondere ein Element verstanden werden, das die zumindest zwei Außenelemente miteinander verbindet und dabei zumindest teilweise einen Mittelbereich des Tragrohrs ausbildet. Dabei ist es denkbar, dass ein Verbindungselement zumindest teilweise auch als eine Außenfläche des Tragrohrs ausgebildet ist. Unter "unterschiedlichen Materialien" sollen dabei insbesondere Materialien verstanden werden, die insbesondere zumindest teilweise unterschiedliche Werkstoffeigenschaften, wie beispielsweise eine unterschiedliche Festigkeit, aufweisen. Dabei ist es denkbar, dass es sich bei den unterschiedlichen Materialien auch um die gleichen Grundmaterialien handelt, es sich lediglich um unterschiedliche Legierungen handelt oder im Falle von Faserverbundwerkstoffen um Verbundwerkstoffe mit unterschiedlichen Fasern. Unter einem "unterschiedlichen Material" soll dabei insbesondere ein Material verstanden werden, welches andere Materialeigenschaften, wie insbesondere eine andere Steifigkeit, eine andere Festigkeit und/oder eine andere Dichte aufweist. Dabei sind die Außenelemente vorzugsweise aus einem steiferen Material gebildet, das vorzugsweise eine höhere Festigkeit aufweist. Dadurch kann das Tragrohr in unterschiedlich belasteten Teilen aus entsprechend vorteilhaften Materialien ausgebildet werden und so kann ein besonders leichtes Tragrohr bereitgestellt werden, das eine erforderliche Steifheit und Festigkeit aufweist.

In einer nicht mehr zur Erfindung gehörenden Ausgestaltung können die Außenelemente aus einem steiferen Material gebildet sein als das wenigstens eine Verbindungselement. Dadurch kann ein besonders vorteilhaftes Tragrohr gebildet werden.

Zudem könnten in der nicht zur Erfindung gehörenden Ausgestaltung die Außenelemente von einem thermoplastischen Verbundwerkstoff gebildet sein. Unter einem "thermoplastischen Verbundwerkstoff" soll dabei insbesondere ein Verbundwerkstoff verstanden werden, der eine Matrix, die von einem Thermoplast gebildet ist, und in der Matrix eingebettete Fasern aufweist. Die Fasern können dabei beispielsweise als Kohlenstofffasern, Glasfasern oder als andere, dem Fachmann als sinnvoll erscheinende Fasern ausgebildet sein. Dadurch können die Außenelemente besonders leicht ausgebildet werden und so kann ein besonders vorteilhaftes Tragrohr bereitgestellt werden.

In einer nicht mehr zur Erfindung gehörenden Ausgestaltung könnte das Tragrohr als ein Doppel-I-Träger ausgebildet sein. Dadurch kann das Tragrohr besonders biegesteif ausgebildet werden.

Ferner wird vorgeschlagen, dass das Tragrohr zumindest eine Symmetrieachse aufweist. Dadurch ist das Tragrohr besonders einfach und vorteilhaft zu fertigen. Grundsätzlich ist es auch denkbar, dass das Tragrohr lediglich einen Symmetriepunkt aufweist und dadurch eine Punktsymmetrie ausbildet.

Weiter wird vorgeschlagen, dass das Tragrohr zumindest teilweise aus einem gerollten Blech ausgebildet ist. Unter einem "gerollten Blech" soll dabei in diesem Zusammenhang insbesondere ein Tragrohr verstanden werden, das von einem Blech gebildet ist, das in einem Fertigungsverfahren zu einem Rohr gerollt wird, wobei die Enden des Blechs zur Ausbildung des Rohrs durch ein geeignetes Verbindungsverfahren, wie insbesondere durch ein Schweißverfahren, stoffschlüssig miteinander verbunden sind. Dadurch können die unterschiedlichen Wandstärken des Tragrohrs besonders einfach hergestellt werden.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind neun Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Flugzeugsitzvorrichtung in einem ersten Ausführungsbeispiel mit einer teilweise dargestellten Flugzeugsitzreihe,
- Fig. 2: eine Schnittansicht eines Tragrohrs einer Aufständereinheit der erfindungsgemäßen Flugzeugsitzvorrichtung,
- Fig. 3: eine Schnittansicht eines Tragrohrs einer Aufständereinheit der erfindungsgemäßen Flugzeugsitzvorrichtung,
- Fig. 4: eine schematische Darstellung einer erfindungsgemäßen Flugzeugsitzvorrichtung in einem zweiten Ausführungsbeispiel mit einer Schnittansicht eines Tragrohrs,
- Fig. 5: eine schematische Darstellung einer erfindungsgemäßen Flugzeugsitzvorrichtung in einem dritten Ausführungsbeispiel mit einer Schnittansicht eines Tragrohrs,
- Fig. 6: eine schematische Darstellung einer erfindungsgemäßen Flugzeugsitzvorrichtung in einem vierten Ausführungsbeispiel mit einer Schnittansicht eines Tragrohrs,
- Fig. 7: eine schematische Darstellung einer erfindungsgemäßen Flugzeugsitzvorrichtung in einem fünften Ausführungsbeispiel mit einer Schnittansicht eines Tragrohrs,
- Fig. 8: eine schematische Darstellung einer nicht mehr zur Erfindung gehörenden Flugzeugsitzvorrichtung in einem sechsten Ausführungsbeispiel mit einer Schnittansicht eines Tragrohrs,
- Fig. 9: eine Schnittansicht eines Tragrohrs mit Anbindungselementen einer nicht mehr zur Erfindung gehörenden Flugzeugsitzvorrichtung,
- Fig. 10: eine schematische Darstellung einer erfindungsgemäßen Flugzeugsitzvorrichtung in einem siebten Ausführungsbeispiel mit einer Schnittansicht eines Tragrohrs,
- Fig. 11: eine schematische Darstellung einer nicht mehr zur Erfindung gehörenden Flugzeugsitzvorrichtung in einem achten Ausführungsbeispiel mit einer Schnittansicht eines Tragrohrs und
- Fig. 12: eine schematische Darstellung einer nicht mehr zur Erfindung gehörenden Flugzeugsitzvorrichtung in einem neunten Ausführungsbeispiel mit einer Schnittansicht eines Tragrohrs.

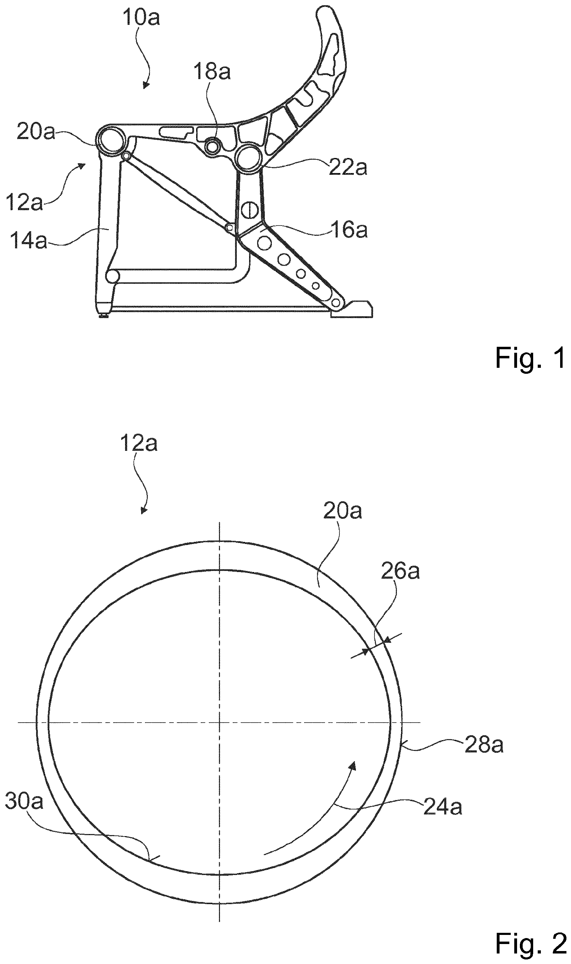

Die Figuren 1 bis 3 zeigen eine Flugzeugsitzvorrichtung in einem ersten Ausführungsbeispiel. Die Flugzeugsitzvorrichtung ist Teil eines lediglich teilweise dargestellten Flugzeugsitzes 10a. Der Flugzeugsitz 10a ist dazu vorgesehen, in einer Flugzeugkabine aufgeständert zu werden. Dabei sind in der Flugzeugkabine vorzugsweise mehrere nicht näher dargestellte Flugzeugsitze aufgeständert. Der Flugzeugsitz 10a weist eine Aufständereinheit 12a auf, mittels deren er in der Flugzeugkabine aufgeständert ist. Dabei ist der Flugzeugsitz 10a Teil einer Flugzeugsitzreihe. Die Sitzreihe umfasst mehrere Flugzeugsitze 10a. Die Aufständereinheit 12a ist dabei ein Teil der Flugzeugsitzreihe. Die Flugzeugsitze 10a der Sitzreihe sind dabei im Wesentlichen gleich ausgebildet. Die Flugzeugsitze 10a einer Sitzreihe sind dabei über die Aufständereinheit 12a auf dem Kabinenboden der Flugzeugkabine aufgeständert. Die Aufständereinheit 12a umfasst zwei vordere Sitzfüße 14a und zwei hintere Sitzfüße 16a, über die der Flugzeugsitz 10a auf dem Kabinenboden der Flugzeugkabine aufgeständert ist. Die Aufständereinheit 12a weist mehrere Sitzteiler 18a auf, über die Teile der Flugzeugsitze 10a der Sitzreihe an die Aufständereinheit 12a angebunden sind.

Die Aufständereinheit 12a weist zwei Tragrohre 20a, 22a auf. Grundsätzlich ist es auch denkbar, dass die Aufständereinheit 12a nur ein Tragrohr oder eine andere Anzahl von Tragrohren 20a, 22a aufweist. Das erste Tragrohr 20a ist als ein vorderes Tragrohr 20a ausgebildet. Das vordere Tragrohr 20a ist an einem vorderen Ende des Flugzeugsitzes 10a im Bereich der vorderen Sitzfüße 14a angeordnet. Das zweite Tragrohr 22a ist als ein hinteres Tragrohr 22a ausgebildet. Das hintere Tragrohr 22a ist an einem hinteren Ende des Flugzeugsitzes 10a im Bereich der hinteren Sitzfüße 16a angeordnet. Die Tragrohre 20a, 22a erstrecken sich in Querrichtung des Flugzeugsitzes 10a. Die Tragrohre 20a, 22a erstrecken sich in Querrichtung über die eine gesamte Breite der Sitzreihe. Die beiden Tragrohre 20a, 22a sind als Hohlprofile ausgebildet. Die Tragrohre 20a, 22a sind als längliche Rohre ausgebildet, die eine Längserstreckung aufweisen, die im Wesentlichen einer Breite der Flugzeugsitzreihe entspricht. Die Tragrohre 20a, 22a weisen jeweils einen ringförmigen Querschnitt auf. Die Tragrohre 20a, 22a sind dabei als einstückige Elemente ausgebildet. Die Tragrohre 20a, 22a weisen keine separaten Außen- und Innenelemente auf. Die beiden Tragrohre 20a, 22a sind unterschiedlich ausgebildet. Grundsätzlich wäre es allerdings auch denkbar, dass die beiden Tragrohre 20a, 22a gleich ausgebildet sind. Dabei wäre es denkbar, dass die beiden gleich ausgebildeten Tragrohre 20a, 22a jeweils eine unterschiedliche Ausrichtung aufweisen.

Das Tragrohr 20a ist als ein einfaches Hohlprofil ausgebildet. Das Tragrohr 20a weist dabei lediglich eine Wandung auf, die einen einzelnen Hohlraum im Inneren begrenzt. Das Tragrohr 20a weist in einer Umfangsrichtung 24a des Tragrohrs 20a eine sich verändernde Wandstärke 26a auf. Die Wandstärke 26a ist dabei von einem Abstand, von einem Mittelpunkt des Tragrohrs 20a radial nach außen gesehen, zwischen einer Innenkontur und einer Außenkontur des Tragrohrs 20a gebildet. Das Tragrohr 20a weist über seine gesamte Längserstreckung die gleiche Wandstärke auf. Über die gesamte Längserstreckung weist das Tragrohr 20a eine sich in Umfangsrichtung 24a verändernde Wandstärke auf. Grundsätzlich wäre es auch denkbar, dass das Tragrohr 20a lediglich in Teilbereichen, beispielsweise in Anlenkbereichen für Sitzfüße 14a, 16a oder Sitzteiler 18a, eine sich in Umfangsrichtung verändernde Wandstärke aufweist. Dabei wäre es durchaus ebenfalls denkbar, dass ein Querschnitt des Tragrohrs 20a in den unterschiedlichen Anlenkbereichen unterschiedlich ausgebildet ist. Das Tragrohr 20a weist eine kreisförmige Außenkontur 28a auf. Die Grundform der Außenkontur 28a bildet dabei einen Kreis aus. Durch die kreisförmige Außenkontur 28a können die Sitzfüße 14a, 16a und die Sitzteiler 18a besonders einfach und vorteilhaft an das Tragrohr 20a angebunden werden. Eine Innenkontur 30a des Tragrohrs 20a weist eine Grundform auf, die sich von der Grundform der Außenkontur 28a unterscheidet. Die Innenkontur 30a des Tragrohrs 20a ist elliptisch ausgebildet. Durch die elliptische Ausbildung der Innenkontur 30a des Tragrohrs 20a kann einfach die sich in Umfangsrichtung verändernde Wandstärke des Tragrohrs 20a erreicht werden. Das Tragrohr 20a ist symmetrisch ausgebildet. Durch die elliptische Ausbildung der Innenkontur 30a weist das Tragrohr 20a in einer Radialrichtung eine wesentlich dünnere Wandstärke auf als in einer um 90 Grad verdrehten Radialrichtung. Dadurch weist das Tragrohr 20a in unterschiedlichen Radialrichtungen unterschiedlich große Widerstandsmomente auf, wodurch das Tragrohr entsprechend einer auf das Tragrohr 20a wirkenden Belastung, beispielsweise durch in das Tragrohr 20a eingeleitete Gurtkräfte, ausgelegt und ausgerichtet werden kann. Dadurch kann ein Gewichtsvorteil erreicht werden.

Das Tragrohr 20a ist dabei als ein gerolltes Blech ausgebildet. Dabei wird in einem Herstellungsverfahren ein Blech als Grundkörper bearbeitet, indem zunächst Mulden in das Blech gerollt werden, die nachher die dünnen Bereiche des Tragrohrs 20a ausbilden. Anschließend wird das Blech so gerollt, dass das Blech zu einem Rohr geformt wird. Die Enden des Blechs werden zum Schluss an ihren Kontaktstellen über ein geeignetes Schweißverfahren fest miteinander verbunden. Grundsätzlich sind auch andere Verfahren denkbar, um die Enden des Blechs stoffschlüssig miteinander zu verbinden. Grundsätzlich wäre es auch denkbar, dass das Tragrohr 20a auf eine andere, dem Fachmann als sinnvoll erscheinende Weise hergestellt ist, beispielsweise mittels eines Druckumformverfahrens.

Das hintere Tragrohr 22a ist als ein einfaches Hohlprofil ausgebildet. Das Tragrohr 22a weist dabei lediglich eine Wandung auf, die einen einzelnen Hohlraum im Inneren begrenzt. Das Tragrohr 22a weist in einer Umfangsrichtung 32a des Tragrohrs 22a eine sich verändernde Wandstärke 34a auf. Die Wandstärke 34a ist dabei von einem Abstand, von einem Mittelpunkt des Tragrohrs radial nach außen gesehen, zwischen einer Innenkontur und einer Außenkontur des Tragrohrs 22a gebildet. Das Tragrohr 22a weist eine kreisförmige Außenkontur 36a auf. Die Grundform der Außenkontur 36a bildet dabei einen Kreis aus. Eine Innenkontur 38a des Tragrohrs 22a bildet im Wesentlichen eine Kreisform aus. Die Innenkontur 38a des Tragrohrs 22a weist Erhebungen 40a, 42a auf. Die Erhebungen 40a, 42a erheben sich von dem kreisförmigen Bereich der Innenkontur 38a nach innen. Dabei erstrecken sich die Erhebungen 40a, 42a in etwa um die Wandstärke des Tragrohrs 22a nach innen. Die Erhebungen 40a, 42a sind auf gegenüberliegenden Seiten der Innenkontur 38a angeordnet. Die Erhebungen 40a, 42a sind dabei gleich ausgebildet. Die Erhebungen 40a, 42a weisen ein Plateau auf. Im Bereich ihres Plateaus weisen die Erhebungen 40a, 42a eine Teilkreisform auf. Die Erhebungen weisen dabei in Umfangsrichtung eine Länge von 10 mm auf. Grundsätzlich ist es auch denkbar, dass die Erhebungen 40a, 42a in Umfangsrichtung 32a eine Länge aufweisen, die in einem Bereich von 5mm bis 30 mm liegt. Das Tragrohr 22a ist dabei symmetrisch ausgebildet. Das Tragrohr 22a weist dabei zusätzlich eine sich in Längserstreckung des Tragrohrs 22a veränderliche Wandstärke 34a auf. Dabei sind die Erhebungen 40a, 42a in Teilbereichen der Längserstreckung des Tragrohrs 22a unterbrochen, wodurch sich die in Längserstreckung veränderliche Wandstärke 34a ergibt.

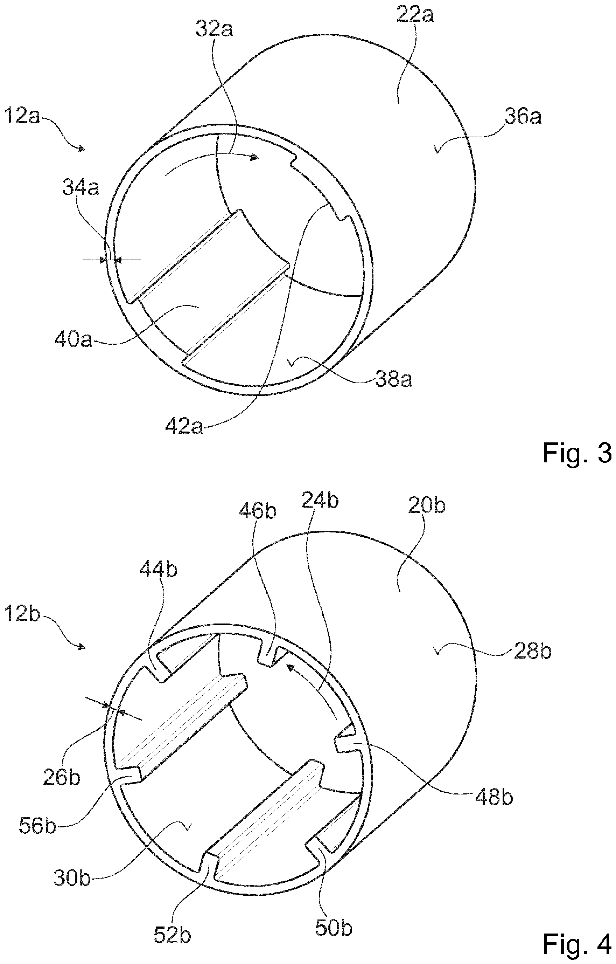

In den Figuren 4 bis 12 sind acht weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 12 ist der Buchstabe a durch die Buchstaben b bis i ersetzt.

Die Figur 4 zeigt eine Flugzeugsitzvorrichtung in einem zweiten Ausführungsbeispiel. Die Flugzeugsitzvorrichtung ist Teil eines nicht näher dargestellten Flugzeugsitzes. Der Flugzeugsitz weist eine Aufständereinheit 12b auf, mittels deren er in der Flugzeugkabine aufgeständert ist. Die Aufständereinheit 12b weist ein Tragrohr 20b und ein nicht dargestelltes Tragrohr auf. Im Unterschied zu dem ersten Ausführungsbeispiel unterscheidet sich lediglich der Querschnitt des Tragrohrs 20b und des nicht dargestellten Tragrohrs von den entsprechenden Tragrohren des ersten Ausführungsbeispiels. Das Tragrohr 20b und das nicht dargestellte Tragrohr sind gleich ausgebildet, weswegen im Folgenden lediglich das Tragrohr 20b näher beschrieben wird. Zur Erläuterung des nicht dargestellten Tragrohrs kann die folgende Beschreibung des Tragrohrs 20b herangezogen werden.

Das Tragrohr 20b ist als ein einfaches Hohlprofil ausgebildet. Das Tragrohr 20b weist dabei lediglich eine Wandung auf, die einen einzelnen Hohlraum im Inneren begrenzt. Das Tragrohr 20b weist in einer Umfangsrichtung 24b des Tragrohrs 20b eine sich verändernde Wandstärke 26b auf. Die Wandstärke 26b ist dabei von einem Abstand, von einem Mittelpunkt des Tragrohrs radial nach außen gesehen, zwischen einer Innenkontur 30b und einer Außenkontur 28b des Tragrohrs 20b gebildet. Das Tragrohr 20b weist eine kreisförmige Außenkontur 28b auf. Die Grundform der Außenkontur 28b bildet dabei einen Kreis aus. Eine Innenkontur 30b des Tragrohrs 20b bildet im Wesentlichen eine Kreisform aus. Die Innenkontur 30b des Tragrohrs 20b weist sechs Erhebungen 44b, 46b, 48b, 50b, 52b, 54b auf. Die Erhebungen 44b, 46b, 48b, 50b, 52b, 54b sind als Stege ausgebildet. Die Erhebungen 44b, 46b, 48b, 50b, 52b, 54b sind gleichmäßig in Umfangsrichtung 24b des Tragrohrs 20b verteilt. Grundsätzlich ist es auch denkbar, dass die Innenkontur 30b eine andere Anzahl von Erhebungen 44b, 46b, 48b, 50b, 52b, 54b aufweist. Die Erhebungen 44b, 46b, 48b, 50b, 52b, 54b erstrecken sich von dem kreisförmigen Teil der Innenkontur 30b nach innen. Die Erhebungen 44b, 46b, 48b, 50b, 52b, 54b weisen dabei von dem kreisförmigen Teil der Innenkontur 30b eine Höhe auf, die einer doppelten minimalen Wandstärke 26b entspricht. Grundsätzlich ist es auch denkbar, dass die Erhebungen 44b, 46b, 48b, 50b, 52b, 54b eine andere, dem Fachmann als sinnvoll erscheinende Höhe aufweisen. Grundsätzlich wäre es ebenfalls denkbar, dass die Erhebungen 44b, 46b, 48b, 50b, 52b, 54b unterschiedliche Höhen aufweisen.

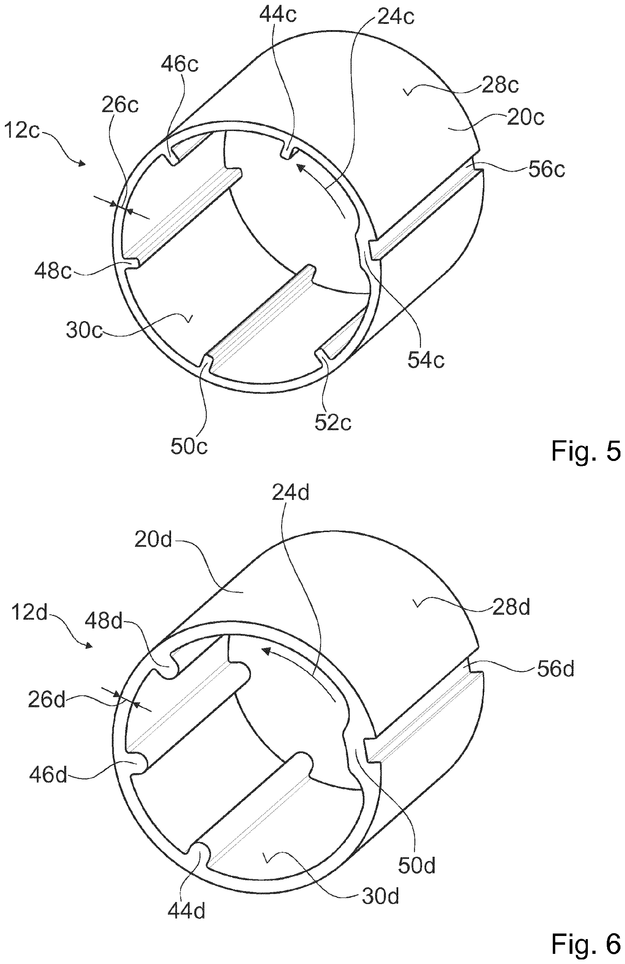

Die Figur 5 zeigt eine Flugzeugsitzvorrichtung in einem dritten Ausführungsbeispiel. Die Flugzeugsitzvorrichtung ist Teil eines nicht näher dargestellten Flugzeugsitzes. Der Flugzeugsitz weist eine Aufständereinheit 12c auf, mittels deren er in der Flugzeugkabine aufgeständert ist. Die Aufständereinheit 12c weist ein Tragrohr 20c und ein nicht dargestelltes Tragrohr auf. Im Unterschied zu dem ersten Ausführungsbeispiel unterscheidet sich lediglich der Querschnitt des Tragrohrs 20c und des nicht dargestellten Tragrohrs von den entsprechenden Tragrohren des ersten Ausführungsbeispiels. Das Tragrohr 20c und das nicht dargestellte Tragrohr sind gleich ausgebildet, weswegen im Folgenden lediglich das Tragrohr 20c näher beschrieben wird. Zur Erläuterung des nicht dargestellten Tragrohrs kann die folgende Beschreibung des Tragrohrs 20c herangezogen werden.

Das Tragrohr 20c ist als ein einfaches Hohlprofil ausgebildet. Das Tragrohr 20c weist dabei lediglich eine Wandung auf, die einen einzelnen Hohlraum im Inneren begrenzt. Das Tragrohr 20c weist in einer Umfangsrichtung 24c des Tragrohrs 20c eine sich verändernde Wandstärke 26c auf. Die Wandstärke 26c ist dabei von einem Abstand, von einem Mittelpunkt des Tragrohrs radial nach außen gesehen, zwischen einer Innenkontur 30c und einer Außenkontur 28c des Tragrohrs 20c gebildet. Das Tragrohr 20c weist eine kreisförmige Außenkontur 28c auf. Die Grundform der Außenkontur 28c bildet dabei einen Kreis aus. Eine Innenkontur 30c des Tragrohrs 20c bildet im Wesentlichen eine Kreisform aus. Die Innenkontur 30c des Tragrohrs 20c weist sechs Erhebungen 44c, 46c, 48c, 50c, 52c, 54c auf. Dabei sind fünf der Erhebungen 44c, 46c, 48c, 50c, 52c gleich ausgebildet. Die Erhebungen 44c, 46c, 48c, 50c, 52c sind gleich ausgebildet wie die entsprechenden Erhebungen aus dem zweiten Ausführungsbeispiel der Figur 4. Die sechste Erhebung 54c weist im Wesentlichen eine gleiche Höhe auf wie die anderen Erhebungen 44c, 46c, 48c, 50c, 52c. Die Erhebung 54c weist ein Plateau auf. Die Erhebung 54c weist in Umfangsrichtung 24c eine Erstreckung auf, die größer ist als die Erhebungen 44c, 46c, 48c, 50c, 52c.

Das Tragrohr 20c weist an seiner Außenkontur 28c eine Vertiefung 56c auf. Die Vertiefung 56c ist in einem Bereich der größten Erhebung 54c der Innenkontur angeordnet. Die Vertiefung 56c erstreckt sich dabei in Längserstreckung des Tragrohrs 20c parallel zu der Erhebung 54c der Innenkontur 30c. Dabei erstreckt sich die Vertiefung 56c über eine komplette Längserstreckung des Tragrohrs 20c. Grundsätzlich wäre es auch denkbar, dass die Vertiefung 56c oder auch einzelne der Erhebungen 44c, 46c, 48c, 50c, 52c, 54c zumindest in Teilbereichen der Längserstreckung nicht vorhanden sind.

Die Figur 6 zeigt eine Flugzeugsitzvorrichtung in einem vierten Ausführungsbeispiel. Die Flugzeugsitzvorrichtung ist Teil eines nicht näher dargestellten Flugzeugsitzes. Der Flugzeugsitz weist eine Aufständereinheit 12d auf, mittels deren er in der Flugzeugkabine aufgeständert ist. Die Aufständereinheit 12d weist ein Tragrohr 20d und ein nicht dargestelltes Tragrohr auf. Im Unterschied zu dem ersten Ausführungsbeispiel unterscheidet sich lediglich der Querschnitt des Tragrohrs 20d und des nicht dargestellten Tragrohrs von den entsprechenden Tragrohren des ersten Ausführungsbeispiels. Das Tragrohr 20d und das nicht dargestellte Tragrohr sind gleich ausgebildet, weswegen im Folgenden lediglich das Tragrohr 20d näher beschrieben wird. Zur Erläuterung des nicht dargestellten Tragrohrs kann die folgende Beschreibung des Tragrohrs 20d herangezogen werden.

Das Tragrohr 20d ist als ein einfaches Hohlprofil ausgebildet. Das Tragrohr 20d weist dabei lediglich eine Wandung auf, die einen einzelnen Hohlraum im Inneren begrenzt. Das Tragrohr 20d weist in einer Umfangsrichtung 24d des Tragrohrs 20d eine sich verändernde Wandstärke 26d auf. Die Wandstärke 26d ist dabei von einem Abstand, von einem Mittelpunkt des Tragrohrs radial nach außen gesehen, zwischen einer Innenkontur 30d und einer Außenkontur 28d des Tragrohrs 20d gebildet. Das Tragrohr 20d weist eine im Wesentlichen kreisförmige Außenkontur 28d auf. Eine Innenkontur 30d des Tragrohrs 20d bildet im Wesentlichen eine Kreisform aus. Die Innenkontur 30d des Tragrohrs 20d weist vier Erhebungen 44d, 46d, 48d, 50d auf. Dabei sind drei der Erhebungen 44d, 46d, 48d gleich ausgebildet. Dabei sind zwei äußere Erhebungen 44d, 48d gleich beabstandet zu der mittleren Erhebung 46d angeordnet. Die Erhebungen 44d, 46d, 48d, weisen dabei eine Höhe auf, die im Wesentlichen einer Wandstärke des Tragrohrs 20d an einer Stelle entspricht, an der die Innenkontur 30d eine Kreisform ausbildet. Die Erhebungen 44d, 46d, 48d weisen jeweils ein abgerundetes Ende auf. Eine Erhebung 50d ist auf einer gegenüberliegenden Seite der mittleren Erhebung 46d an der Innenkontur 30d angeordnet. Die Erhebung 50d weist eine Höhe auf, die im Wesentlichen einer Wandstärke des Tragrohrs 20d an einer Stelle entspricht, an der die Innenkontur 30d eine Kreisform ausbildet. Die Erhebung 50d bildet ein Plateau aus. Die Erhebung 50d erstreckt sich dabei in Umfangsrichtung 24d des Tragrohrs 20d in etwa um eine doppelte Wandstärke 26d des Tragrohrs 20d in einem Bereich, in dem die Innenkontur eine Kreisform ausbildet. Grundsätzlich ist es auch denkbar, dass die Erhebung 50d eine anders große Erstreckung aufweist. Das Tragrohr 20d weist an seiner Außenkontur 28d eine Vertiefung 56d auf. Die Vertiefung 56d ist in einem Bereich einer größten Erhebung 54d der Innenkontur 30d angeordnet. Die Vertiefung 56d erstreckt sich dabei in Längserstreckung des Tragrohrs 20d parallel zu der Erhebung 50d der Innenkontur 30d. Dabei erstreckt sich die Vertiefung 56d über eine komplette Längserstreckung des Tragrohrs 20d. Grundsätzlich wäre es auch denkbar, dass die Vertiefung 56d oder auch einzelne der Erhebungen 44d, 46d, 48d, 50d zumindest in Teilbereichen der Längserstreckung nicht vorhanden sind.

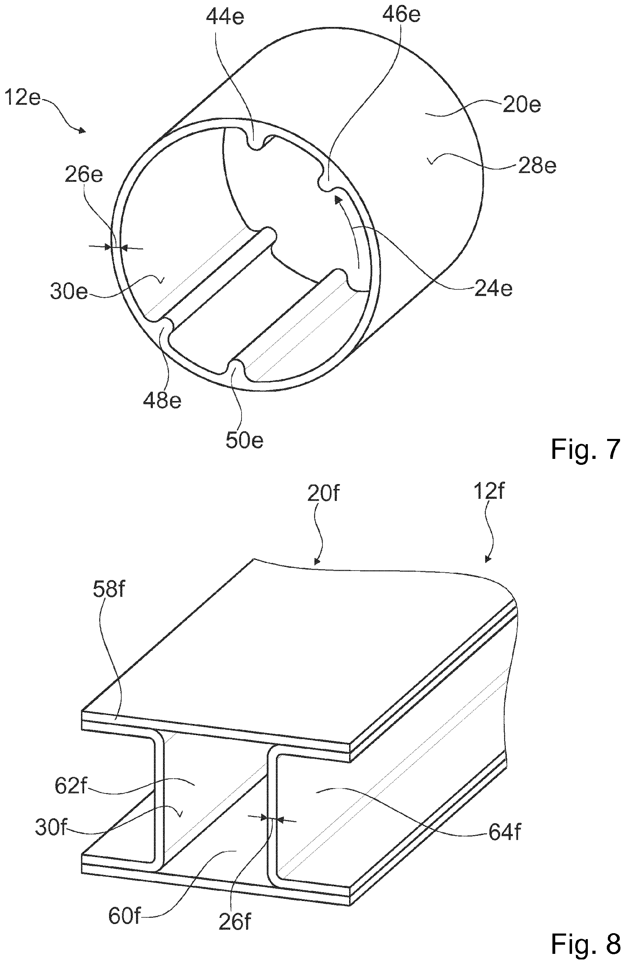

Die Figur 7 zeigt eine Flugzeugsitzvorrichtung in einem nicht mehr zur Erfindung gehörenden Ausführungsbeispiel. Die Flugzeugsitzvorrichtung ist Teil eines nicht näher dargestellten Flugzeugsitzes. Der Flugzeugsitz weist eine Aufständereinheit 12e auf, mittels deren er in der Flugzeugkabine aufgeständert ist. Die Aufständereinheit 12e weist ein Tragrohr 20e und ein nicht dargestelltes Tragrohr auf. Im Unterschied zu dem ersten Ausführungsbeispiel unterscheidet sich lediglich der Querschnitt des Tragrohrs 20e und des nicht dargestellten Tragrohrs von den entsprechenden Tragrohren des ersten Ausführungsbeispiels. Das Tragrohr 20e und das nicht dargestellte Tragrohr sind gleich ausgebildet, weswegen im Folgenden lediglich das Tragrohr 20e näher beschrieben wird. Zur Erläuterung des nicht dargestellten Tragrohrs kann die folgende Beschreibung des Tragrohrs 20e herangezogen werden.

Das Tragrohr 20e ist als ein einfaches Hohlprofil ausgebildet. Das Tragrohr 20e weist dabei lediglich eine Wandung auf, die einen einzelnen Hohlraum im Inneren begrenzt. Das Tragrohr 20e weist in einer Umfangsrichtung 24e des Tragrohrs 20e eine sich verändernde Wandstärke 26e auf. Die Wandstärke 26e ist dabei von einem Abstand, von einem Mittelpunkt des Tragrohrs radial nach außen gesehen, zwischen einer Innenkontur 30e und einer Außenkontur 28e des Tragrohrs 20e gebildet. Das Tragrohr 20e weist eine im Wesentlichen kreisförmige Außenkontur 28e auf. Eine Innenkontur 30e des Tragrohrs 20e bildet im Wesentlichen eine Kreisform aus. Die Innenkontur 30e des Tragrohrs 20e weist vier Erhebungen 44e, 46e, 48e, 50e auf. Dabei sind die vier Erhebungen 44e, 46e, 48e, 50e gleich ausgebildet. Die zwei Erhebungen 44e, 46e und die zwei Erhebungen 48e, 50e sind jeweils paarweise angeordnet. Dabei sind die Erhebungen 44e, 46e und die Erhebungen 48e, 50e spiegelbildlich zu einer Mittelebene des Tragrohrs 20e angeordnet. Die Erhebung 44e und die Erhebung 46e weisen einen gleichen Abstand zueinander auf wie die Erhebung 48e und die Erhebung 50e. Die Erhebungen 44e, 46e, 48e, 50e weisen jeweils ein abgerundetes Ende auf.

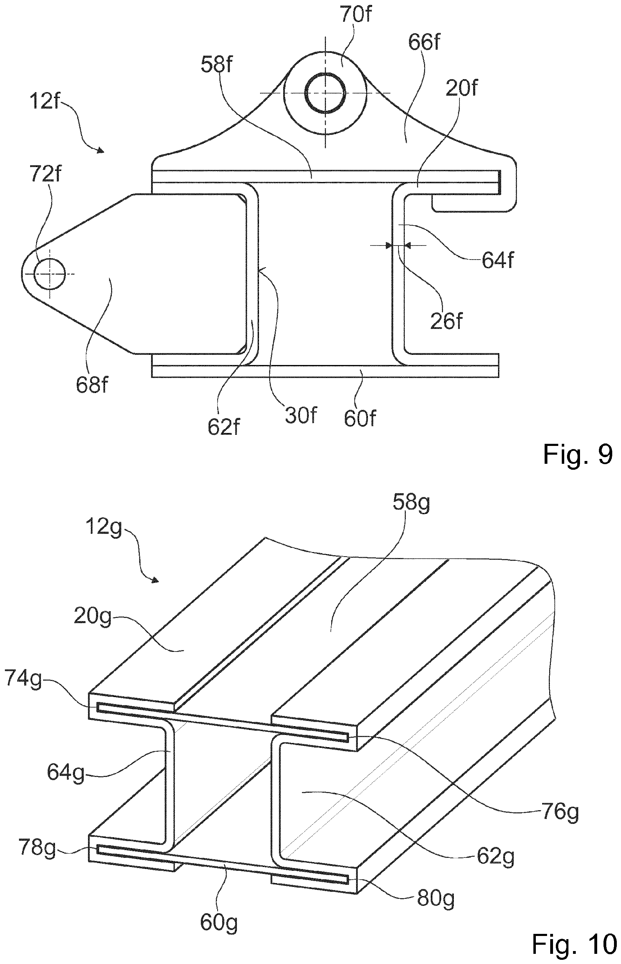

Die Figuren 8 und 9 zeigen eine Flugzeugsitzvorrichtung in einem nicht mehr zur Erfindung gehörenden Ausführungsbeispiel. Die Flugzeugsitzvorrichtung ist Teil eines nicht näher dargestellten Flugzeugsitzes. Der Flugzeugsitz weist eine Aufständereinheit 12f auf, mittels deren er in der Flugzeugkabine aufgeständert ist. Die Aufständereinheit 12f weist ein Tragrohr 20f und ein nicht dargestelltes Tragrohr auf. Im Unterschied zu dem ersten Ausführungsbeispiel unterscheidet sich lediglich der Querschnitt des Tragrohrs 20f und des nicht dargestellten Tragrohrs von den entsprechenden Tragrohren des ersten Ausführungsbeispiels. Das Tragrohr 20f und das nicht dargestellte Tragrohr sind gleich ausgebildet, weswegen im Folgenden lediglich das Tragrohr 20f näher beschrieben wird. Zur Erläuterung des nicht dargestellten Tragrohrs kann die folgende Beschreibung des Tragrohrs 20f herangezogen werden. Grundsätzlich ist es auch denkbar, dass das Tragrohr 20f als ein einzelnes Tragrohr ausgebildet ist und die Aufständereinheit lediglich das eine Tragrohr 20f aufweist.

Das Tragrohr 20f ist im Unterschied zu den vorhergehenden Ausführungsbeispielen anders ausgebildet. Das Tragrohr 20f ist mehrteilig ausgeführt. Das Tragrohr 20f weist zwei Außenelemente 58f, 60f auf. Die Außenelemente 58f, 60f sind beabstandet zueinander angeordnet. Die Außenelemente 58f, 60f sind als Platten ausgebildet. Die als Platten ausgebildeten Außenelemente 58f, 60f sind dabei insbesondere als Platten aus einem Faserverbundwerkstoff gebildet. Die Außenelemente 58f, 60f sind von einem Verbundwerkstoff gebildet. Die Außenelemente 58f, 60f sind insbesondere von einem thermoplastischen Verbundwerkstoff gebildet. Dabei sind die Außenelemente 58f, 60f vorzugsweise aus kohlefaserverstärkten Platten aus einer Thermoplastmatrix gebildet. Die Außenelemente 58f, 60f sind als Prepregplatten ausgebildet. Das Tragrohr 20f weist zwei Verbindungselemente 62f, 64f auf. Die Außenelemente 58f, 60f sind durch zwei Verbindungselemente 62f, 64f miteinander verbunden. Die Verbindungselemente 62f, 64f und die Außenelemente 58f, 60f sind aus einem unterschiedlichen Material ausgebildet. Die Außenelemente 58f, 60f sind aus einem steiferen Material ausgebildet als die Verbindungselemente 62f, 64f. Die Verbindungselemente 62f, 64f sind aus einem Metallblech gebildet. Insbesondere sind die Verbindungselemente 62f, 64f aus einem Titanblech, einem Aluminiumblech und/oder aus einem Magnesiumblech gebildet. Die Verbindungselemente 62f, 64f weisen dabei einen U-förmigen Querschnitt auf. Die Verbindungselemente 62f, 64f sind mit ihrer geöffneten Seite nach außen ausgerichtet. Mit ihren geschlossenen Unterseiten sind die Verbindungselemente 62f, 64f jeweils einander zugewandt. Die Verbindungselemente 62f, 64f sind beabstandet zueinander ausgerichtet. Die äußeren Seitenflächen der Verbindungselemente 62f, 64f sind jeweils einem der Außenelemente 58f, 60f zugewandt. Über die Seitenflächen sind die Verbindungselemente 62f, 64f mit den Außenelementen 58f, 60f verbunden. Dabei sind die Verbindungselemente 62f, 64f und die Außenelemente 58f, 60f vorzugsweise über eine Stoffschlussverbindung miteinander verbunden. Die Verbindungselemente 62f, 64f und die Außenelemente 58f, 60f sind über eine Klebeverbindung miteinander verbunden. Grundsätzlich ist es auch denkbar, dass die Verbindungselemente 62f, 64f und die Außenelemente 58f, 60f über eine andere, dem Fachmann als sinnvoll erscheinende Methode miteinander verbunden sind, beispielsweise über eine Form- und/oder Kraftschlussverbindung. Die Verbindungselemente 62f, 64f und die Außenelemente 58f, 60f schließen durch ihre Beabstandung zueinander einen Innenbereich des Tragrohrs 20f ein. Das Tragrohr 20f ist dadurch als ein Doppel-I-Träger ausgebildet.

Das Tragrohr 20f ist als ein einfaches Hohlprofil ausgebildet. Das Tragrohr 20f weist dabei lediglich eine Wandung auf, die einen einzelnen Hohlraum im Inneren begrenzt. Das Tragrohr 20f weist in einer Umfangsrichtung 24f des Tragrohrs 20f eine sich verändernde Wandstärke 26f auf. Die Wandstärke 26f wird dabei entlang einer Innenkontur 30f des Tragrohrs 20f nach außen gemessen.

Wie in Figur 9 zu sehen, weist das Tragrohr 20f zwei Anbindungselemente 66f, 68f auf. Das erste Anbindungselement 66f ist dabei zur Anbindung eines Sitzteilers vorgesehen. Grundsätzlich ist es auch denkbar, dass das erste Anbindungselement 66f zur Anbindung von anderen Elementen des Flugzeugsitzes vorgesehen ist. Das Anbindungselement 66f ist an einer Oberseite des Tragrohrs 20f angebracht. Das Anbindungselement 66f greift dabei auf einer Seite um das obere Außenelement 58f und einen Teil des Verbindungselements 64f herum. Des Weiteren ist das Anbindungselement 66f über eine stoffschlüssige Verbindung, insbesondere eine Klebeverbindung, mit dem Außenelement 58f verbunden. Das Anbindungselement 66f weist ein Aufnahmeloch 70f auf. Über das Aufnahmeloch 70f ist der Sitzteiler mit dem Anbindungselement 66f und dadurch mit dem Tragrohr 20f verbunden. Das zweite Anbindungselement 68f ist zur Anbindung eines nicht näher dargestellten Sitzmoduls, wie beispielsweise einer Fußstütze, einer Beinauflage oder eines Videoarms vorgesehen. Das Anbindungselement 68f ist dazu innerhalb der U-Form des Verbindungelements 62f angeordnet. Dabei ist das Anbindungselement 68f über eine Stoffschlussverbindung mit dem Verbindungselement 62f verbunden. Das Anbindungselement 68f weist ein Aufnahmeloch 72f auf. Über das Aufnahmeloch 72f ist der Sitzfuß an das Anbindungselement 68f und damit das Tragrohr 20f anbindbar.

Die Figur 10 zeigt eine Flugzeugsitzvorrichtung in einem nicht mehr zur Erfindung gehörenden Ausführungsbeispiel. Die Flugzeugsitzvorrichtung ist Teil eines nicht näher dargestellten Flugzeugsitzes. Der Flugzeugsitz weist eine Aufständereinheit 12g auf, mittels deren er in der Flugzeugkabine aufgeständert ist. Die Aufständereinheit 12g weist zwei Tragrohre 20g auf. Das Tragrohr 20g ist im Unterschied zu den vorhergehenden Ausführungsbeispielen anders ausgebildet. Das Tragrohr 20g ist mehrteilig ausgeführt. Das Tragrohr 20g weist zwei Außenelemente 58g, 60g auf. Die Außenelemente 58g, 60g sind beabstandet zueinander angeordnet. Die Außenelemente 58g, 60g sind durch zwei Verbindungselemente 62g, 64g miteinander verbunden. Das Tragrohr 20g weist die zwei Verbindungselemente 62g, 64g auf. Die Verbindungselemente 62g, 64g und die Außenelemente 58g, 60g sind aus einem unterschiedlichen Material ausgebildet. Die Verbindungselemente 62g, 64g sind im Gegensatz zu denen aus dem vorhergehenden sechsten Ausführungsbeispiel anders ausgebildet. Die Verbindungselemente 62g, 64g sind ebenfalls im Wesentlichen U-förmig ausgebildet. Zusätzlich weisen die Verbindungselemente 62g, 64g an ihren Enden jeweils Formschlusselemente 74g, 76g, 78g, 80g auf, mittels denen die Verbindungselemente 62g, 64g formschlüssig mit den Außenelementen gekoppelt sind. Mit den

Formschlusselementen 74g, 76g, 78g, 80g umgreifen die Verbindungselemente 62g, 64g die Außenelemente 58g, 60g.

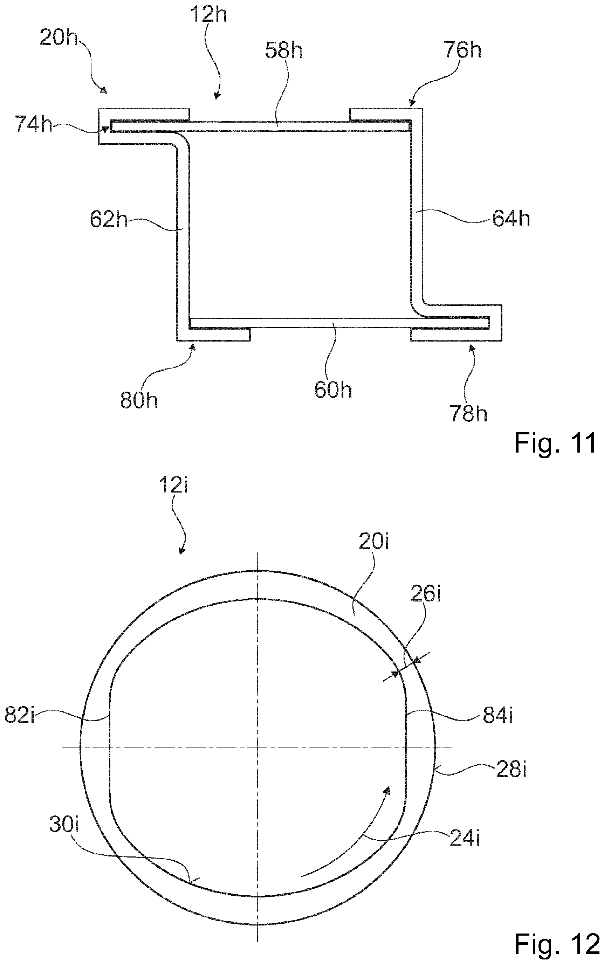

Die Figur 11 zeigt eine Flugzeugsitzvorrichtung in einem nicht mehr zur Erfindung gehörenden Ausführungsbeispiel. Die Flugzeugsitzvorrichtung ist Teil eines nicht näher dargestellten Flugzeugsitzes. Der Flugzeugsitz weist eine Aufständereinheit 12h auf, mittels deren er in der Flugzeugkabine aufgeständert ist. Die Aufständereinheit 12h weist zwei Tragrohre 20h auf. Das Tragrohr 20h ist im Unterschied zu den vorhergehenden Ausführungsbeispielen anders ausgebildet. Das Tragrohr 20h ist mehrteilig ausgeführt. Das Tragrohr 20h weist zwei Außenelemente 58h, 60h auf. Die Außenelemente 58h, 60h sind beabstandet zueinander angeordnet. Die Außenelemente 58h, 60h sind durch zwei Verbindungselemente 62h, 64h miteinander verbunden. Das Tragrohr 20h weist zwei Verbindungselemente 62h, 64h auf. Die Verbindungselemente 62h, 64h und die Außenelemente 58h, 60h sind aus einem unterschiedlichen Material ausgebildet. Die Verbindungselemente 62h, 64h sind, im Gegensatz zu denen aus dem vorhergehenden sechsten Ausführungsbeispiel, anders ausgebildet. Die Verbindungselemente 62h, 64h weisen an ihren oberen und unteren Enden jeweils Formschlusselemente 74h, 76h, 78h, 80h auf. Dabei unterscheiden sich die zwei Formschlusselemente 74h, 76h, 78h, 80h eines Verbindungselements 62h, 64h voneinander. Ein Formschlusselement 74h, 78h der Verbindungselemente 62h, 64h ist dabei hakenförmig ausgebildet und dazu vorgesehen, ein Ende eines der Außenelemente 62h, 64h jeweils zu umgreifen. Die Formschlusselemente 74h, 78h sind U-förmig ausgebildet. Die Formschlusselemente 76h, 80h sind L-förmig ausgebildet und dazu vorgesehen, eine Auflagefläche für ein Ende eines der Verbindungselemente 62h, 64h bereitzustellen. Die Verbindungselemente 62h, 64h sind jeweils über eine stoffschlüssige Verbindung mit den Formschlusselementen 74h, 76h, 78h, 80h verbunden.

Die Figur 12 zeigt eine Flugzeugsitzvorrichtung in einem neunten Ausführungsbeispiel. Die Flugzeugsitzvorrichtung ist Teil eines nicht näher dargestellten Flugzeugsitzes. Der Flugzeugsitz weist eine Aufständereinheit 12i auf, mittels deren er in der Flugzeugkabine aufgeständert ist. Die Aufständereinheit 12i weist ein Tragrohr 20i und ein nicht dargestelltes Tragrohr auf. Im Unterschied zu dem ersten Ausführungsbeispiel unterscheidet sich lediglich der Querschnitt des Tragrohrs 20i und des nicht dargestellten Tragrohrs von den entsprechenden Tragrohren des ersten Ausführungsbeispiels. Das Tragrohr 20i und das nicht dargestellte Tragrohr sind gleich ausgebildet, weswegen im Folgenden lediglich das Tragrohr 20i näher beschrieben wird. Zur Erläuterung des nicht dargestellten Tragrohrs kann die folgende Beschreibung des Tragrohrs 20i herangezogen werden.

Das Tragrohr 20i ist als ein einfaches Hohlprofil ausgebildet. Das Tragrohr 20i weist dabei lediglich eine Wandung auf, die einen einzelnen Hohlraum im Inneren begrenzt. Das Tragrohr 20i weist in einer Umfangsrichtung 24i des Tragrohrs 20i eine sich verändernde Wandstärke 26i auf. Die Wandstärke 26i ist dabei von einem Abstand, von einem Mittelpunkt des Tragrohrs radial nach außen gesehen, zwischen einer Innenkontur 30i und einer Außenkontur 28i des Tragrohrs 20i gebildet. Das Tragrohr 20i weist eine kreisförmige Außenkontur 28i auf. Die Grundform der Außenkontur 28i bildet dabei einen Kreis aus. Die Außenkontur 28i ist analog zu der entsprechenden Außenkontur des Tragrohrs aus dem ersten Ausführungsbeispiel ausgebildet.

Eine Innenkontur 30i des Tragrohrs 20i weist eine Grundform auf, die sich von der Grundform der Außenkontur 28i unterscheidet. Die Innenkontur 30i des Tragrohrs 20i ist teilweise elliptisch ausgebildet. Durch die teilweise elliptische Ausbildung der Innenkontur 30i des Tragrohrs 20i kann einfach die sich in Umfangsrichtung 24i verändernde Wandstärke des Tragrohrs 20i erreicht werden. Das Tragrohr 20i ist symmetrisch ausgebildet. Durch die teilweise elliptische Ausbildung der Innenkontur 30i weist das Tragrohr 20i in einer Radialrichtung eine wesentlich dünnere Wandstärke auf als in einer um 90 Grad verdrehten Radialrichtung. Auf zwei sich gegenüberliegenden Seiten bildet die Innenkontur 30i zwei zueinander parallel verlaufende gerade Innenflächen 82i, 84i aus. Durch die geraden Innenflächen 82i, 84i wird die Wandstärke 26i in den Bereichen der geraden Innenflächen 82i, 84i wesentlich verstärkt. Dadurch kann ein besonders stabiles Tragrohr 20i gebildet werden. Durch die geraden Innenflächen 82i, 84i können insbesondere Fehler während eines Strangpressprozesses vermieden werden, wodurch insbesondere eine Herstellung des Tragrohrs 20i optimiert werden kann. Dadurch kann insbesondere eine kostengünstige Herstellung des Tragrohrs 20i erreicht werden.

**Bezugszeichen**
- 10: Flugzeugsitz
- 12: Aufständereinheit
- 14: Sitzfuß
- 16: Sitzfuß
- 18: Sitzteiler
- 20: Tragrohr
- 22: Tragrohr
- 24: Umfangsrichtung
- 26: Wandstärke
- 28: Außenkontur
- 30: Innenkontur
- 32: Umfangsrichtung
- 34: Wandstärke
- 36: Außenkontur
- 38: Innenkontur
- 40: Erhebung
- 42: Erhebung
- 44: Erhebung
- 46: Erhebung
- 48: Erhebung
- 50: Erhebung
- 52: Erhebung
- 54: Erhebung
- 56: Vertiefung
- 58: Außenelement
- 60: Außenelement
- 62: Verbindungselement
- 64: Verbindungselement
- 66: Anbindungselement
- 68: Anbindungselement
- 70: Aufnahmeloch
- 72: Aufnahmeloch
- 74: Formschlusselement
- 76: Formschlusselement
- 78: Formschlusselement
- 80: Formschlusselement
- 82: Innenfläche
- 84: Innenfläche

## Patentansprüche

1. Flugzeugsitzvorrichtung mit zumindest einem Tragrohr (20a, 22a; 20b; 20c; 20d; 20e; 20i), das dazu vorgesehen ist, zumindest einen Teil einer Aufständereinheit (12a; 12b; 12c; 12d; 12e; 12i) eines Flugzeugsitzes auszubilden, wobei das zumindest eine Tragrohr (20a, 22a; 20b; 20c; 20d; 20e; 20i) als ein einfaches Hohlprofil ausgebildet ist und in zumindest einem Teilbereich, in Umfangsrichtung des Tragrohrs (20a, 22a; 20b; 20c; 20d; 20e; 20i) betrachtet, eine sich verändernde Wandstärke (26a, 34a; 26b; 26c; 26d; 26e; 26i) und eine zumindest im Wesentlichen kreisförmige Außenkontur (28a, 36a; 28b; 28c; 28d; 28e; 28i) aufweist, wobei sich die Außenkontur (28a, 36a; 28b; 28c; 28d; 28e; 28i) des Tragrohrs (20a, 22a; 20b; 20c; 20d; 20e; 20i) in ihrer Grundform zumindest in Teilbereichen von einer Grundform einer Innenkontur (30a, 38a; 30b; 30c; 30d; 30e; 30i) unterscheidet.

2. Flugzeugsitzvorrichtung nach Anspruch 1, **dadurch gekennzeichnet, dass** das Tragrohr (20a, 22a; 20b; 20c; 20d; 20e; 20i) zumindest ein einstückiges Element aufweist, das, in Umfangsrichtung (24a, 32a; 24b; 24c; 24d; 24e; 24i) des Tragrohrs (20a, 22a; 20b; 20c; 20d; 20e; 20i) betrachtet, eine sich verändernde Wandstärke (26a, 34a; 26b; 26c; 26d; 26e; 26i) aufweist.

3. Flugzeugsitzvorrichtung nach einem der vorhergehenden Ansprüche, **dadurch gekennzeichnet, dass** das Tragrohr (22a) entlang seiner Längserstreckung eine sich verändernde Wandstärke (34a) aufweist.

4. Flugzeugsitzvorrichtung nach einem der vorhergehenden Ansprüche, **dadurch gekennzeichnet, dass** das Tragrohr (20a, 22a; 20b; 20c; 20d; 20e), zumindest eine Symmetrieachse aufweist.

5. Flugzeugsitzvorrichtung nach einem der vorhergehenden Ansprüche, **dadurch gekennzeichnet, dass** das Tragrohr (20a) zumindest teilweise aus einem gerollten Blech ausgebildet ist.

6. Flugzeugsitz mit einer Flugzeugsitzvorrichtung nach einem der vorhergehenden Ansprüche.

## Claims

1. Aircraft seat device with at least one support tube (20a, 22a; 20b; 20c; 20d; 20e; 20i), which is configured to realize at least part of a mounting unit (12a; 12b; 12c; 12d; 12e; 12i) of an aircraft seat,
wherein the at least one support tube (20a, 22a; 20b; 20c; 20d; 20e; 20i) is embodied as a simple hollow profile and has, viewed in a circumferential direction of the support tube (20a, 22a; 20b; 20c; 20d; 20e; 20i), in at least one partial region, a changing wall thickness (26a, 34a; 26b; 26c; 26d; 26e; 26i) and an at least substantially circular outer contour (28a, 36a; 28b, 28c; 28d; 28e; 28i),
wherein the outer contour (28a, 36a; 28b, 28c; 28d; 28e; 28i) of the support tube (20a, 22a; 20b; 20c; 20d; 20e; 20i) differs in its basic shape at least in portions from a basic shape of an inner contour (30a, 38a; 30b; 30c; 30d; 30e; 30i).

2. Aircraft seat device according to claim 1,
**characterised in that** the support tube (20a, 22a; 20b; 20c; 20d; 20e; 20i) comprises at least one one-piece element that has, viewed in the circumferential direction (24a, 32a; 24b; 24c; 24d; 24e; 24i) of the support tube (20a, 22a; 20b; 20c; 20d; 20e; 20i), a changing wall thickness (26a, 34a; 26b; 26c; 26d; 26e; 26i).

3. Aircraft seat device according to one of the preceding claims,
**characterised in that** the support tube (22a) has a changing wall thickness (34a) along its longitudinal extension.

4. Aircraft seat device according to one of the preceding claims,
**characterised in that** the support tube (20a, 22a; 20b; 20c; 20d; 20e) has at least one symmetry axis.

5. Aircraft seat device according to one of the preceding claims,
**characterised in that** the support tube (20a) is at least partially implemented of a rolled metal sheet.

6. Aircraft seat with an aircraft seat device according to one of the preceding claims.

## Revendications

1. Dispositif de siège d'avion avec au moins un tube porteur (20a, 22a ; 20b ; 20c ; 20d ; 20e ; 20i), qui est prévu à former au moins une partie d'une unité à monter (12a ; 12b, 12c ; 12d ; 12e ; 12i) d'un siège d'avion,
l'au moins un tube porteur (20a, 22a ; 20b ; 20c ; 20d ; 20e ; 20i) étant réalisé comme profile creux simple et ayant, vu dans une direction circonférentielle du tube porteur (20a, 22a ; 20b ; 20c ; 20d ; 20e ; 20i), dans au moins une zone partielle une épaisseur de paroi changeant (26a, 34a ; 26b ; 26c ; 26d ; 26e ; 26i) et un contour extérieur (28a, 36a ; 28b ; 28c ; 28d ; 28e ; 28i) au moins sensiblement en forme circulaire,
le contour extérieur (28a, 36a ; 28b ; 28c ; 28d ; 28e ; 28i) du tube porteur (20a, 22a ; 20b ; 20c ; 20d ; 20e ; 20i) différant dans sa forme basique, au moins dans des zones partielles, d'une forme basique d'un contour intérieur (30a, 38a ; 30b ; 30c ; 30d ; 30e ; 30i).

2. Dispositif de siège d'avion selon la revendication 1,
**caractérisé en ce que** le tube porteur (20a, 22a ; 20b ; 20c ; 20d ; 20e ; 20i) comporte au moins un élément une-pièce qui a, vu dans la direction circonférentielle (24a, 32a ; 24b ; 24c ; 24d ; 24e ; 24i) du tube porteur (20a, 22a ; 20b ; 20c ; 20d ; 20e ; 20i), une épaisseur de paroi changeant (26a, 34a ; 26b ; 26c ; 26d ; 26e ; 26i).

3. Dispositif de siège d'avion selon l'une quelconque des revendications précédentes,
**caractérisé en ce que** le tube porteur (22a) a une épaisseur de paroi changeant (34a) le long de son extension longitudinale.

4. Dispositif de siège d'avion selon l'une quelconque des revendications précédentes,
**caractérisé en ce que** le tube porteur (20a, 22a ; 20b ; 20c ; 20d ; 20e) comporte au moins un axe de symétrie.

5. Dispositif de siège d'avion selon l'une quelconque des revendications précédentes,
**caractérisé en ce que** le tube porteur (20a) est formé au moins partiellement d'une tôle roulée.

6. Siège d'avion avec un dispositif de siège d'avion selon l'une quelconque des revendications précédentes.
